# EUROPEAN PATENT APPLICATION

(11) **EP 2 555 110 A1**
(43) Date of publication of application: **06.02.2013**
(21) Application number: 10848763.8
(22) Date of filing: 11.11.2010
(51) Int. Cl.: G06F 9/445

(54) **SMART MOBILE PHONE SYSTEM AND BOOT METHOD THEREOF**

(30) Priority: 01.04.2010 CN 201010141404
(71) Applicant: Huizhou TCL Mobile Communication Co., Ltd, Shenzhen, Guangdong 518067 (CN)
(72) Inventor: ZHENG, Zhengwei, Shenzhen Guangdong 518067 (CN); CHEN, Zhiling, Shenzhen Guangdong 518067 (CN)
(74) Representative: Isarpatent
(86) International application number: PCT/CN2010/078653
(87) International publication number: WO 2011/120305

(57) **Abstract**

The present invention provides a smart phone system, which includes a memory for storing operating systems. The memory includes: a boot zone for storing a boot load program for initialization and loading a selected bootloader into a RAM when a system hardware is powered up; bootloader zones of at least two operating systems for respectively store the bootloader of the first operating system and the second operating system; binary code zones of the at least two operating systems for respectively store binary codes of the first operating system and the second operating system. An arbitrary operating system can be selected to boot among various operating system when booting the smart phone system. Therefore, adaptability and extendibility of the smart phone can be increased without the costs of adding a hardware.

## Description

### TECHNICAL FIELD OF THE INVENTION

The present invention relates to a smart phone technology, and especially to a smart phone system and a booting method thereof.

### BACKGROUND OF THE INVENTION

With a rapid growth and development in mobile phone chips and batteries technologies, there is rapid development for a smart phone with an open operating system (OS). Embedded operating systems, such as an Android OS which is launched especially by Google and an iPhone launched by Apple, as well as established companies such as Nokia launched Symbin OS and Microsoft launched Windows Mobile OS, all have truly formed a tripartite confrontation in the operating systems of the smart phones. The respective operating systems have different locations, for example, the Windows Mobile is targeted for servicing business applications, and the Android is more focused on entertainment.

However, the above-mentioned operating systems (software) can be stored and operated in the mobile phone device (hardware) in an one to one manner in the prior art, such that only a single operating system can work in a smart phone, unlike a personal computer, which can store and operate various operate systems. There are certain limitations in practical usage, and users are unable to be satisfied by the needs of various operate systems and the practical uses.

### SUMMARY OF THE INVENTION

An objective of the present invention is to provide a smart phone system with a capability of storing and operating multiple operating systems.

The technical solution of this invention is implemented as follows.

A smart phone system, includes a memory storing operating systems, characterized in that the memory comprises:

a boot zone for storing a boot load program for an initialization and loading a selected bootloader into a RAM when a system hardware is powered up;

two bootloader zones of at least two operating systems for respectively storing the bootloaders of the first operating system and the second operating system;

two binary code zones of the at least two operating systems for respectively storing binary codes of the first operating system and the second operating system.

In the smart phone system herein, the memory further includes: user data zones of the at least two operating systems for respectively storing user data of the first operating system and the second operating system, and a share filesystem zone of the operating systems for storing shared files of various operating systems.

In the smart phone system herein, the memory further comprises a bad block table and a reserved zone.

In the smart phone system herein, a memory address segment of the boot zone is 0x0 to 0x40000, a memory address segment of the bootloader of the first operating system is 0x4000 to 0x140000, a memory address segment of the bootloader of the second operating system ends at 0x8B00000, and a memory address segment of the binary code zone of the second operating system is 0x8B00000 to 0x8E00000.

In the smart phone system herein, a memory address segment of the user data zone of the second operating system is 0x8E00000 to 0xCE00000.

In the smart phone system herein, memory address segments of the bad block table and reserved zone are respectively 0xCE00000 to 0xF040000 and 0xF040000 to 0xFFFFFFF.

A method for booting the smart phone system includes the steps of:

(A) selecting an operating system in a user interface;

(B) loading the bootloader of the selected operating system into the RAM;

(C) booting the selected operating system by the bootloader.

In the booting method herein, before the step (A), the method further comprises the step of: (A0) downloading at least two operating systems into the memory.

In the booting method herein, the step (A0) specifically comprises the steps of:

(A01) formatting the memory and establishing a good block table, a bad block table, and a backup table;

(A02) downloading the boot load program to the boot zone of the memory;

(A03) downloading driver files of the first operating system and operating system files thereof into corresponding zones of the memory;

(A04) downloading driver files of the second operating system and operating system files thereof into corresponding zones of the memory.

In the booting method herein, the first operating system is an Android, and the second operating system is a Windows Mobile.

In accordance with the above-mentioned smart phone system and the booting method thereof, an arbitrary operating system can be selected to boot among various operating systems when booting the system. Therefore, adaptability and extendibility of the smart phone can be increased without the costs of adding the hardware.

### BRIEF DESCRIPTION OF THE DRAWINGS

FIG. 1 is a schematic drawing illustrating a memory of a smart phone system according to one preferred embodiment of the present invention;

FIG. 2 is a flow chart illustrating an installation of a dual operating system of the smart phone system according to the preferred embodiment of the present invention; and

FIG. 3 is a flow chart illustrating a booting method of the smart phone system according to the preferred embodiment of the present invention.

### DETAILED DESCRIPTION OF THE INVENTION

Reference will now be made in detail to the present preferred embodiment of the invention, example of which is illustrated in the accompanying drawings.

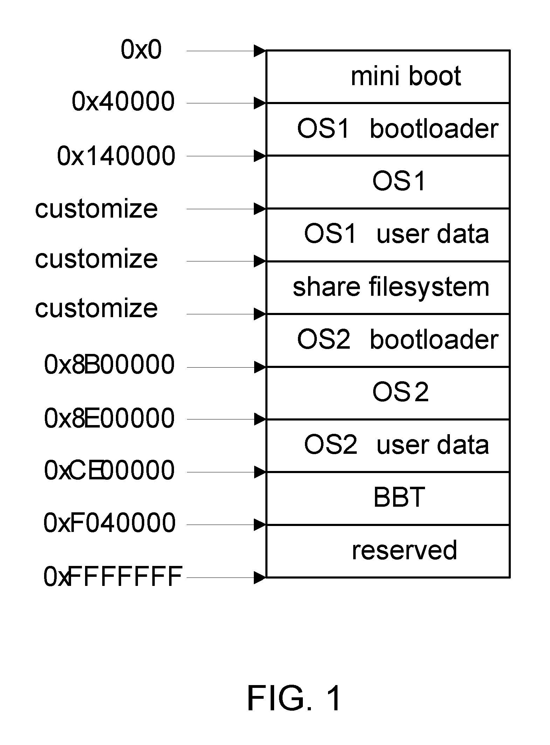

Referring to FIG. 1, a preferred embodiment of the present invention provides a smart phone system of a dual operating system, whose memory (flash) includes the following zones. A boot zone (mini Boot) is used for initialization and loading of a bootloader when a system hardware is powered up, and the memory address segment thereof is 0x0 to 0x40000. A bootloader zone (OS 1 bootloader) of a first operating system stores a bootloader which is utilized to boot the first operating system, and the memory address segment thereof is 0x4000 to 0x140000. A binary code zone (OS1) of the first operating system is configured to store binary codes of the first operating system OS 1, and the memory address segment thereof can be customized by a user; a user data zone (OS 1 user data) of the first operating system is configured to store user data of the first operating system, and the memory address segment thereof can be defined by the user. A share filesystem zone (share filesystem) of the operating systems is configured to store shared files of the plurality of operating systems, wherein the share filesystem zone requires be an identical filesystem. In the preferred embodiment of the present invention, a FAT filesystem is employed, and the memory address segment thereof can be defined by the user. A bootloader zone (OS2 bootloader) of a second operating system stores a bootloader which is utilized to boot the second operating system, and the memory address segment thereof ends at 0x8B00000. A binary code zone (OS2) of the second operating system is configured to store binary codes of the second operating system OS1, and the memory address segment thereof is 0x8B00000 to 0x8E00000. A user data zone (OS 1 user data) of the second operating system is configured to store user data of the second operating system, and the memory address segment thereof is 0x8E00000 to 0xCE00000. A bad block table is designated as BBT, and the memory address segment thereof is 0xCE00000 to 0xF040000. A reserved zone is designated as reserved, and the memory address segment thereof is 0xF040000 to 0xFFFFFFF.

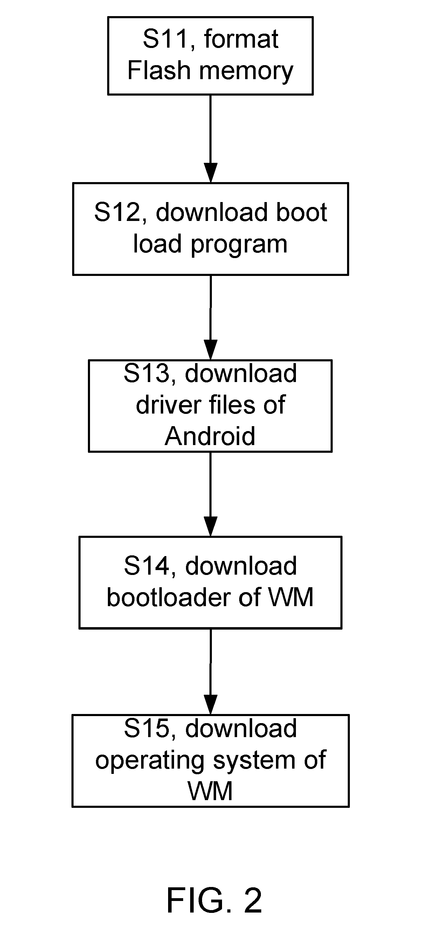

In the preferred embodiment of the present invention, the memory is a NAND flash memory, and the first operating system is the Android OS, and the second operating system is the Windows Mobile OS. Please continue to refer to FIG. 2. The steps of loading the bootloader and the binary codes of the dual operating system into the corresponding zones of the memory are specifically described as follows. At step S11, the NAND flash memory is formatted by a XDB (a special binary downloader), and a good block table, a bad block table, and a backup table are established. At step S12, BOLB files (boot load program) are downloaded to the mini boot zone of the flash memory by the XDB, so as to perform the booting and loading of the bootloader after powering up the system. At step S 13, the mini boot is started to download three binary files of Andriod, which are respectively a zimage (system and driver zones of the Android), a system.img (UI and resource file storage zones of the Android), and a userdata.img (zones of user data). At step S 14, the bootloader of the Windows Mobile is downloaded to the flash memory by the XDB. At step S 15, the OS of the Windows Mobile is downloaded by the bootloader of the WM (Windows Mobile).

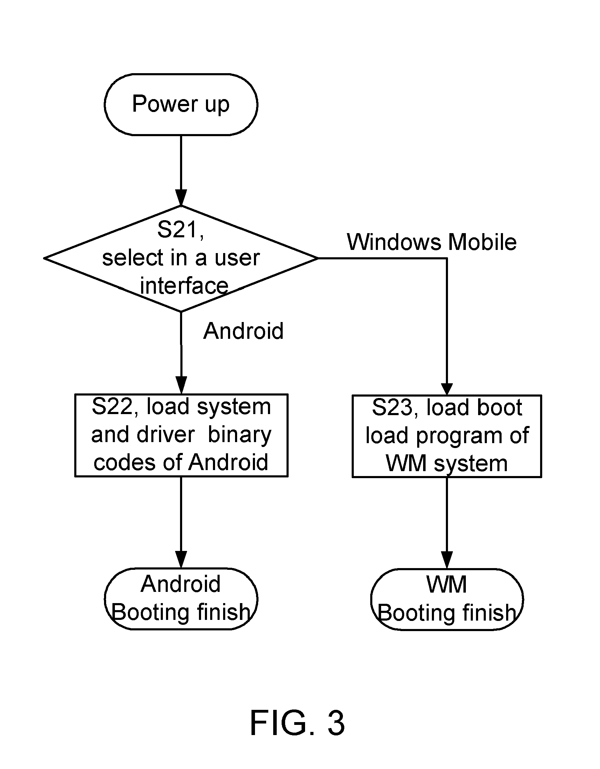

FIG. 3 is a flow chart illustrating the booting method of the smart phone system of the present invention. The method includes the following steps. At step S21, after powering up the smart phone system, a desired type of the operating systems is selected from a startup menu. At step S22, if the user selects the Android operating system, the system and driver binary codes (zimage binary code) of the Android are directly copied to a specified RAM (random access memory), and a CPU jumps to the corresponding address to boot the Android operating system. At step S23, if the user selects the Windows Mobile, the bootloarder thereof copies the boot load program (IPL binary code, WM boot binary code) of the WM system to the specified RAM, and the CPU directly jumps to the RAM to boot the Windows Mobile operating system after setting a jump state of the CPU.

The present invention has the following characteristics. 1, the operating systems can be arbitrarily switched. A desired type of the operating systems can be selected when powering up the system, and the user can select a desired operating system in the startup menu. 2, the cost is low. The dual operating system completely shares a set of hardware without the cost being increased by adding a hardware. 3, applicability is strong. The users can choose the system they like according to their requirements. The WM operating system can be chosen when reading business file (Word) is desired, and the Android system can be chosen when a stronger entertainment is desired. 4, the extensibility is strong. Different operating systems can be booted through the different operating system of the present invention, and it can be selectively booted among the arbitrary dual operating system or multiple operating systems.

The preferred embodiment of the present invention has described in detail the know how to load and boot the dual system of the Windows Mobile and the Android. Based on the same concept, it can extend to other dual operating system, such as the Windows mobile as well as the OMS, the Symbian as well as the Android, and so on, and it also can extend to multi operating systems to selectively boot.

As is understood by a person skilled in the art, it can be improved or alternated according to the foregoing explanation. All modifications, alterations, and improvements which maintain the spirit and realm of the present invention are within the scope of the present invention.

## Claims

1. A smart phone system, comprising a memory storing operating systems, **characterized in that** the memory comprises:
a boot zone for storing a boot load program for an initialization and loading a selected bootloader into a RAM when a system hardware is powered up;
bootloader zones of at least two operating systems for respectively storing the bootloaders of the first operating system and the second operating system;
binary code zones of the at least two operating systems for respectively storing binary codes of the first operating system and the second operating system.

2. The smart phone system according to claim 1, **characterized in that** the memory further comprises: user data zones of the at least two operating systems for respectively storing user data of the first operating system and the second operating system, and a share filesystem zone of the operating systems for storing shared files of the operating systems.

3. The smart phone system according to claim 2, **characterized in that** the memory further comprises a bad block table and a reserved zone.

4. The smart phone system according to one of claim 1 to claim 3, **characterized in that** a memory address segment of the boot zone is 0x0 to 0x40000, a memory address segment of the bootloader of the first operating system is 0x4000 to 0x140000, a memory address segment of the bootloader of the second operating system ends at 0x8B00000, and a memory address segment of the binary code zone of the second operating system is 0x8B00000 to 0x8E00000.

5. The stereoscopic display system according to claim 2, **characterized in that** a memory address segment of the user data zone of the second operating system is 0x8E00000 to 0xCE00000.

6. The stereoscopic display system according to claim 3, **characterized in that** memory address segments of the bad block table and reserved zone are respectively 0xCE00000 to 0xF040000 and 0xF040000 to 0xFFFFFFF.

7. A method for booting the smart phone system according to claim 1, comprising the steps of:
(A) selecting an operating system in a user interface;
(B) loading the bootloader of the selected operating system into the RAM;
(C) booting the selected operating system by the bootloader.

8. The booting method according to claim 7, **characterized in that** before the step (A), the method further comprises the step of: (A0) downloading at least two operating systems into the memory.

9. The booting method according to claim 8, **characterized in that** the step (A) specifically comprises the steps of:
(A01) formatting the memory and establishing a good block table, a bad block table, and a backup table;
(A02) downloading the boot load program to the boot zone of the memory;
(A03) downloading driver files of the first operating system and operating system files thereof into corresponding zones of the memory;
(A04) downloading driver files of the second operating system and operating system files thereof into corresponding zones of the memory.

10. The booting method according to claim 9, **characterized in that** the first operating system is an Android, and the second operating system is a Windows Mobile.
